# EUROPÄISCHE PATENTSCHRIFT

(11) **EP 2 197 712 B1**
(45) Veröffentlichungstag und Bekanntmachung des Hinweises auf die Patenterteilung: **20.07.2011**
(21) Anmeldenummer: 09769230.5
(22) Anmeldetag: 23.06.2009
(51) Int. Cl.: B60R 21/20

(54) **GASSACKMODUL FÜR EIN FAHRZEUGINSASSEN-RÜCKHALTESYSTEM UND VERFAHREN ZUM HERSTELLEN EINES GASSACKMODULS**
GAS BAG MODULE FOR A VEHICLE OCCUPANT RESTRAIN SYSTEM AND METHOD FOR MANUFACTURING A GAS BAG MODULE
MODULE AIRBAG POUR SYSTÈME DE RETENUE D'UN OCCUPANT D'UN VÉHICULE, ET PROCÉDÉ DE PRODUCTION D'UN MODULE AIRBAG

(30) Priorität: 26.06.2008 DE 102008030184
(43) Veröffentlichungstag der Anmeldung: 23.06.2010
(73) Patentinhaber: Takata-Petri AG, 63743 Aschaffenburg (DE)
(72) Erfinder: HAMELS, Stefan, 63743 Aschaffenburg (DE)
(74) Vertreter: Staroske, Sandro
(86) Internationale Anmeldenummer: PCT/EP2009/057776
(87) Internationale Veröffentlichungsnummer: WO 2009/156381

(56) Entgegenhaltungen:
- EP-A- 1 803 613
- DE-U1-202006 005 319

## Beschreibung

Die Erfindung betrifft ein Gassackmodul für ein Fahrzeuginsassen-Rückhaltesystem gemäß Anspruch 1 sowie ein Verfahren gemäß Anspruch 15 zum Herstellen eines Gassackmoduls. Das erfindungsgemäße Gassackmodul umfasst einen Gassack, der in einer Umhüllung vakuumverpackt ist.

Das Vakuumverpacken eines Gassacks eines Fahrzeuginsassen-Rückhaltesystems ist z.B. aus den gattungsbildenden Dokumenten DE 20 2006 005 319 U1 und EP-A-1 803 613 bekannt.

Das von der vorliegenden Erfindung zu lösende Problem besteht darin, einem Ablösen von Teilen der Vakuumumhüllung des Gassacks beim Entfalten des Gassacks entgegenzuwirken.

Dieses Problem wird durch das Gassackmodul mit den Merkmalen des Anspruchs 1 sowie durch das Verfahren mit den Merkmalen des Anspruchs 15 gelöst. Weiterbildungen der Erfindung sind in den abhängigen Ansprüchen angegeben.

Danach wird ein Gassackmodul zur Verfügung gestellt, mit
- einem aufblasbaren Gassack;
- einer Umhüllung, in der der Gassack vakuumverpackt ist und die ein erstes und ein zweites Material aufweist, wobei
- das erste Material eine geringere Gasdurchlässigkeit als das zweite Material und das zweite Material eine höhere Reißfestigkeit als das erste Material aufweist.

Die Umhüllung (Verpackung) des Gassacks ist somit einerseits durch das erste Material ausreichend gasdicht ausgebildet, damit das Vakuum in der Umhüllung für einen ausreichenden Zeitraum erhalten bleibt. Andererseits ist die Umhüllung durch das zweite Material reißfest genug, um einem Abreißen (Separation) von Teilen der Umhüllung terial reißfest genug, um einem Abreißen (Separation) von Teilen der Umhüllung beim Entfalten des Gassacks entgegenzuwirken und möglichst zu vermeiden.

In einer Ausgestaltung der Erfindung ist die Umhüllung in Form einer Folie ausgebildet, wobei das erste Material eine erste Lage und das zweite Material eine zweite Lage zumindest eines Abschnitts der Folie bilden. Das erste und das zweite Material sind hier somit jeweils folienartig ausgebildet, wobei die erste Lage die Dichtfunktion übernimmt und die zweite Lage die Reißfestigkeit der Umhüllung sicherstellt. Es sei erwähnt, dass die Umhüllung zwar ausschließlich aus der ersten und der zweiten Lage gebildet sein kann. Dies ist jedoch nicht zwingend erforderlich, so dass die Umhüllung neben der ersten und der zweiten Lage durchaus weitere Materiallagen aufweisen kann.

Insbesondere ist das erste Material mit dem zweiten Material verbunden. Das Verbinden des ersten und des zweiten Materials erfolgt z. B. durch Kaschieren und/oder Laminieren. In dem Fall, dass das erste und das zweite Material jeweils in Form einer Folie ausgebildet sind, können die beiden Folien insbesondere parallel zueinander angeordnet und miteinander verbunden sein. Die beiden Folien können zudem unmittelbar aneinander liegen oder z.B. auch über eine weitere Materiallage miteinander verbunden sein.

Um ein möglichst kontrolliertes Aufreißen der Umhüllung beim Entfalten des Gassacks zu erzielen, kann das zweite Material, insbesondere wenn dieses in Form einer Folie ausgebildet ist, einen Aufreißbereich aufweisen, der unter dem Druck des sich entfaltenden Gassacks aufreißt. Beispielsweise kann der Aufreißbereich als Materialschwächung in dem zweiten Material und/oder in Form einer Perforation im zweiten Material ausgebildet sein. Zusätzlich kann auch das erste Material einen Aufreißbereich aufweisen.

Das erste, gasdichtere Material bildet z.B. eine innere, d.h. an den gefalteten Gassack angrenzende, Lage der Umhüllung, während das zweite, reißfestere Material eine äußere Lage der Umhüllung bildet. Es kann jedoch auch umgekehrt das zweite Material, auch wenn nur dieses einen Aufreißbereich aufweist, eine innere Lage und das erste Material eine äußere Lage der Umhüllung bilden.

In einer anderen Ausgestaltung der Erfindung weist die folienartig ausgestaltete Umhüllung eine Unter- und eine Oberfolie auf, wobei die Unterfolie eine Aufnahme ausbildet, in der der Gassack aufgenommen ist. Die Oberfolie verschließt die durch die Unterfolie ausgebildete Aufnahme. Unter- und Oberfolie sind hierbei miteinander z.B. durch Verkleben oder Verschweißen miteinander verbunden.

In einer Variante der Erfindung ist die folienartige Umhüllung so ausgestaltet, dass nur die Oberfolie die erste und die zweite Lage aufweist. Beispielsweise ist nur die Oberfolie mehrlagig aus mindestens einer ersten, gasdichten und einer zweiten, reißfesten Folie gebildet, während die Unterfolie nur eine einzelne, gasdichte Folie aufweist. In einer anderen Variante ist sowohl die Ober- als auch die Unterfolie mehrlagig, z.B. zweilagig, mit jeweils einer gasdichten und einer reißfesten Folie ausgebildet.

Die Oberfolie kann neben der ersten und der zweiten Lage eine weitere Lage umfassen, die besser als die erste Lage mit der Unterfolie verschweißbar ist. In dieser Variante weist die Oberfolie also neben der gasdichten ersten Lage und der reißfesten zweiten Lage eine weitere, gut schweißbare Lage auf, die nicht unbedingt die Gasundurchlässigkeit der ersten Folie haben muss. Die Oberfolie kann jedoch auch eine erste Lage aufweisen, die sowohl gasdicht als auch gut verschweißbar mit der Unterfolie ist.

Ist das zweite Material in Form einer Folie ausgebildet, beeinflusst die Dicke der Folie die Reißfestigkeit. In einem Beispiel ist die Folie (d.h. die zweite Lage einer folienartigen Umhüllung) mit einer Dicke von mindestens 0,1 mm ausgebildet.

Als zweites Material (auch in Folienform) kommt z. B. Polyethylen-Spinnvlies, HD-Polyethylen (hochdichtes Polyethylen), Polycarbonat und/oder Polyamid in Frage. Insbesondere weist das zweite Material eine Zugfestigkeit von mindestens 70 N/mm² auf. Selbstverständlich kann auch ein zweites Material verwendet werden, das eine geringere Reißfestigkeit aufweist, so lange diese ausreicht, um einer Separation des zweiten Materials beim Aufblasen des Gassacks entgegenzuwirken.

Insbesondere kann ein zweites Material gewählt werden, das eine hohe Weiterreißfestigkeit aufweist, so dass beim Entfalten des Gassacks ein kontrolliertes Aufreißen des zweiten Materials in einem Aufreißbereich (z. B. wie oben bereits erwähnt in Form einer Perforation in dem zweiten Material) möglich ist, ohne dass das zweite Material so über den Aufreißbereich hinaus aufreißt, dass sich Teile des zweiten Materials ablösen und durch den sich entfaltenden Gassack beschleunigt werden.

Als erstes Material kommt beispielsweise ein thermoplastischer Kunststoff, z.B. PET (Polyethylenterephthalat) oder PE (Polyethylen), in Frage. Bei Ausbildung des ersten Materials als Folie weist diese beispielsweise eine Dicke zwischen 0,05 und 0,15 mm auf. Selbstverständlich können auch andere Materialien mit einer ausreichenden Gasdichtigkeit verwendet werden, z.B. mit einer Gasdichtigkeit, die der Gasdichtigkeit einer PE-Folie mit einer Dicke zwischen 0,05 und 0,15 mm entspricht.

Die Erfindung betrifft des Weiteren ein Verfahren zum Herstellen eines Gassackmoduls, insbesondere eines Gassackmoduls mit den oben beschriebenen Eigenschaften. Das Verfahren weist die Schritte auf:
- Bereitstellen und Falten eines Gassacks;
- Vakuumverpacken des gefalteten Gassacks in einer Umhüllung, die ein erstes und ein zweites Material aufweist, wobei
- das erste Material eine geringere Gasdurchlässigkeit als das zweite Material und das zweite Material eine höhere Reißfestigkeit als das erste Material aufweist.

Die Erfindung wird im Folgenden anhand von Ausführungsbeispielen unter Bezugnahme auf die Figuren näher erläutert. Es zeigen:
- Fig. 1: eine Umhüllung eines Gassacks gemäß einem ersten Ausführungsbeispiel der Erfindung; und
- Fig. 2: eine Umhüllung eines Gassacks gemäß einem zweiten Ausführungsbeispiel der Erfindung.

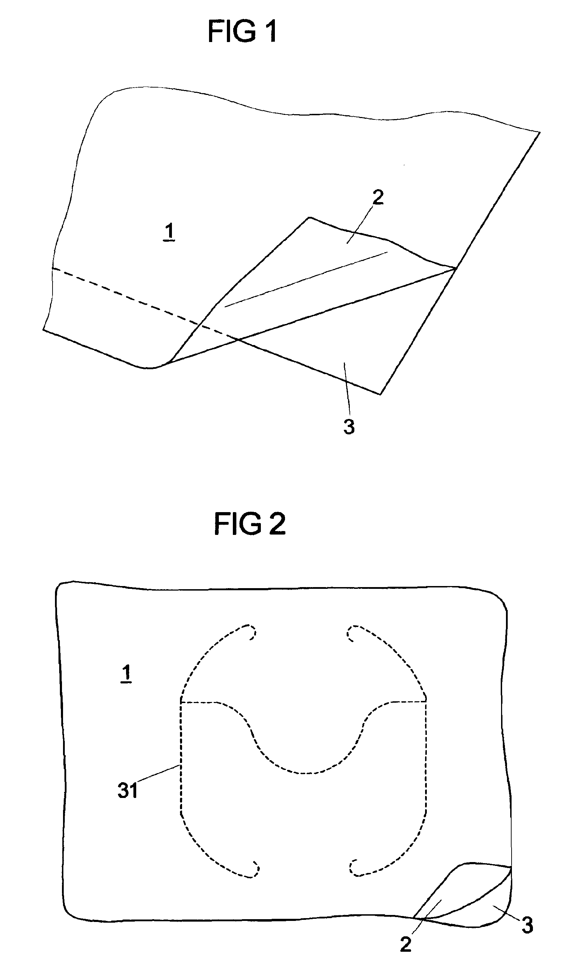

Figur 1 zeigt eine folienartige Umhüllung 1 zur Vakuumverpackung eines Gassacks (nicht dargestellt), die ein erstes Material in Form einer ersten Folie 2 aufweist. Die erste Folie 2 ist mit einem zweiten Material in Form einer zweiten Folie 3 verbunden, wobei die erste und die zweite Folie 2, 3 flächig aneinander liegen. Die erste Folie 2 ist in Fig. 1 von der zweiten Folie 3 lediglich zur Illustration in einem Eckbereich abgebogen.

Die zweite Folie 3 ist aus einem Material gebildet, das eine im Vergleich mit dem Material der ersten Folie 2 höhere Reißfestigkeit aufweist, z.B. aus einem hochreißfesten Material gebildet sein kann. Die Reißfestigkeit der zweiten Folie 3 reicht aus, einem Lösen von Teilabschnitten der zweiten Folie beim Entfalten des in der Umhüllung verpackten Gassacks entgegenzuwirken. Zudem kann die hohe Reißfestigkeit der zweiten Folie 3 auch einem Ablösen von anderen Bereichen der Umhüllung 1, insbesondere der ersten Folie 2, beim Entfalten des Gassacks entgegenwirken.

Die erste Folie 2 wird somit durch die zweite Folie 3 stabilisiert und muss daher selber keine besonders hohe Reißfestigkeit aufweisen. Allerdings weist die erste Folie 2 eine geringere Gasdurchlässigkeit, z. B. gegenüber Gas, das zum Aufblasen des Gassacks verwendet wird, auf als die zweite Folie 3. Somit sorgt die zweite Folie 3 zwar für eine hohe Reißfestigkeit der Umhüllung 1, sie muss jedoch nicht besonders gasundurchlässig sein, da diese Eigenschaft der Umhüllung von der ersten Folie 2 bereitgestellt wird.

Die erste und zweite Folie 2, 3 können z. B. durch Kaschieren oder Laminieren flächig aneinanderliegend miteinander so verbunden sein, dass sie einen festen Verbund bilden.

Figur 2 zeigt einen Ausschnitt aus einer Gassackumhüllung 1, die wie im Beispiel der Figur 1 folienartig ausgebildet ist und die analog zu Fig. 1 ein erstes Material in Form einer ersten Folie 2 und ein zweites Material in Form einer zweiten Folie 3 aufweist.

In der zweiten, reißfesteren Folie 3 ist ein Aufreißbereich in Form einer Perforation 31 ausgebildet. Die Perforation 31 ist so beschaffen, dass sie durch den sich entfaltenden Gassack so aufreißen kann, dass eine Öffnung in der zweiten Folie 3 entsteht, durch die hindurch sich der Gassack entfalten kann. Das Material der zweiten Folie weist eine hohe Weiterreißfestigkeit auf, so dass die zweite Folie im Wesentlichen nur entlang der Perforation 31 aufreißt und nicht über sie hinaus.

### Bezugszeichenliste

- 1: Umhüllung
- 2: erste Folie
- 3: zweite Folie
- 31: Perforation

## Patentansprüche

1. Gassackmodul für ein Fahrzeuginsassen-Rückhaltesystems, mit
- einem aufblasbaren Gassack;
- einer Umhüllung (1), in der der Gassack vakuumverpackt ist und die ein erstes und ein zweites Material (2, 3) aufweist, **dadurch gekennzeichnet, daß**
- das erste Material (2) eine geringere Gasdurchlässigkeit als das zweite Material (3) und das zweite Material (3) eine höhere Reißfestigkeit als das erste Material (2) aufweist.

2. Gassackmodul nach Anspruch 1, **dadurch gekennzeichnet, dass** die Umhüllung (1) als Folie ausgebildet ist, wobei das erste Material (2) eine erste Lage und das zweite Material (3) eine zweite Lage zumindest eines Abschnitts der Folie bilden.

3. Gassackmodul nach Anspruch 1 oder 2, **dadurch gekennzeichnet, dass** das zweite Material (3) einen Aufreißbereich (31) aufweist, der ein Aufreißen des zweiten Materials (3) unter dem Druck des sich entfaltenden Gassacks ermöglicht.

4. Gassackmodul nach Anspruch 3, **dadurch gekennzeichnet, dass** der Aufreißbereich (31) in Form einer Materialschwächung und/oder in Form einer Perforation in dem zweiten Material (3) ausgebildet ist.

5. Gassackmodul nach einem der Ansprüche 2 bis 4, **dadurch gekennzeichnet, dass** die erste Lage in Form einer ersten Folie und die zweite Lage in Form einer zweiten Folie ausgebildet ist.

6. Gassackmodul nach einem der Ansprüche 2 bis 5, **dadurch gekennzeichnet, dass** die folienartige Umhüllung aufweist:
- eine Unterfolie, die eine Aufnahme ausbildet, in der der Gassack aufgenommen ist; sowie
- eine Oberfolie, die die durch die Unterfolie ausgebildete Aufnahme verschließt.

7. Gassackmodul nach Anspruch 6, **dadurch gekennzeichnet, dass** nur die Oberfolie die erste und die zweite Lage aufweist.

8. Gassackmodul nach Anspruch 6, **dadurch gekennzeichnet, dass** sowohl die Unterals auch die Oberfolie jeweils die erste und die zweite Lage aufweisen.

9. Gassackmodul nach Anspruch 7 oder 8, **dadurch gekennzeichnet, dass** die Oberfolie eine weitere Lage aufweist, die besser als die erste Lage mit der Unterfolie verschweißbar ist.

10. Gassackmodul nach einem der Ansprüche 2 bis 9, **dadurch gekennzeichnet, dass** die zweite Lage eine Dicke von mindestens 0,1 mm aufweist.

11. Gassackmodul nach einem der vorhergehenden Ansprüche, **dadurch gekennzeichnet, dass** das erste Material (2) mit dem zweiten Material (3) verbunden ist.

12. Gassackmodul nach Anspruch 11, **dadurch gekennzeichnet, dass** das erste und das zweite Material (2, 3) durch Kaschieren und/oder Laminieren verbunden sind.

13. Gassackmodul nach einem der vorhergehenden Ansprüche, **dadurch gekennzeichnet, dass** das zweite Material (3) Polyethylen-Spinnvlies, HD-Polyethylen, Polycarbonat und/oder Polyamid umfasst.

14. Gassackmodul nach einem der vorhergehenden Ansprüche, **dadurch gekennzeichnet, dass** das zweite Material (3) eine Reißfestigkeit von mindestens 70 N/mm² aufweist.

15. Verfahren zum Herstellen eines Gassackmoduls, insbesondere gemäß einem der vorhergehenden Ansprüche, mit den Schritten:
- Bereitstellen und Falten eines Gassacks;
- Vakuumverpacken des gefalteten Gassacks in einer Umhüllung (1), die ein erstes und ein zweites Material (2, 3) aufweist, **dadurch gekennzeichnet, daß**
- das erste Material (2) eine geringere Gasdurchlässigkeit als das zweite Material (3) und das zweite Material (3) eine höhere Reißfestigkeit als das erste Material (2) aufweist.

## Claims

1. Gas bag module for a vehicle occupant restraint system comprising
- an inflatable gas bag;
- an envelope (1) inside of which the gas bag is vacuum packed and which comprises a first and a second material (2, 3),
**characterized in that**
the first material (2) has a lower gas permeability than the second material (3) and the second material (3) has a higher tear strength than the first material (2).

2. Gas bag module according to claim 1, **characterized in that**.the envelope (1) is designed as a film, whereas the first material (2) forms a first layer and the second material (3) forms a second layer of at least a section of the film.

3. Gas bag module according to claim 1 or 2, **characterized in that** the second material (3) has a tear-open region (31), which enables the second material (3) being teared open under the pressure of the unfolding gas bag.

4. Gas bag module according to claim 3, **characterized in that** the tear-open region (31) is designed in form of a pre-weakening material and/or in form of a perforation in the second material (3).

5. Gas bag module according to one of the claims 2 to 4, **characterized in that** the first layer is designed in form of a first film and the second layer is designed in form of a second film.

6. Gas bag module according to one of the claims 2 to 5, **characterized in that** the film-like envelope comprises
- a base film forming a receptacle into which the gas bag is mounted; as well as
- a top film which encloses the receptacle formed by the base film.

7. Gas bag module according to claim 6, **characterized in that** only the top film comprises the first and the second layer.

8. Gas bag module according to claim 6, **characterized in that** the base film as well as the top film comprise the first and the second layer, respectively.

9. Gas bag module according to claim 7 or 8, **characterized in that** the top film has a further layer, which can be welded to the base film better than the first layer.

10. Gas bag module according to one of the claims 2 to 9, **characterized in that** the second layer has a thickness of at least 0.1 mm.

11. Gas bag module according to one of the preceding claims, **characterized in that** the first material (2) is connected to the second material (3).

12. Gas bag module according to claim 11, **characterized in that** the first and the second material (2, 3) are connected to each other by lining and/or laminating.

13. Gas bag module according to one of the preceding claims, **characterized in that** the second material (3) comprises polyethylene spunbonded fabric, HD-polyethylene, polycarbonate and/or polyamide.

14. Gas bag module according to one of the preceding claims, **characterized in that** the second material (3) has a tear strength of at least 70 N/mm².

15. Method for producing a gas bag module, in particular according to one of the preceding claims, with the following steps:
- providing and folding a gas bag;
- vacuum packing of the folded gas bag in an envelope (1), which has a first and a second material (2, 3), **characterized in that**
- the first material (2) has a lower gas permeability than the second material (3) and the second material (3) has a higher tear strength than the first material (2).

## Revendications

1. Module d'airbag pour un système de retenue de passager dans un véhicule, comprenant
- un coussin gonflable ;
- une enveloppe (1), dans laquelle le coussin gonflable est emballé sous vide et qui comprend un premier et un second matériau (2, 3), **caractérisé en ce que**
- le premier matériau (2) présente une perméabilité aux gaz plus faible que le second matériau (3), et le second matériau (3) présente une résistance à la déchirure plus élevée que le premier matériau (2).

2. Module d'airbag selon la revendication 1, **caractérisé en ce que** l'enveloppe (1) est réalisée sous forme de film, dans lequel le premier matériau (2) forme une première couche et le second matériau (3) forme une seconde couche, dans au moins une portion du film.

3. Module d'airbag selon la revendication 1 ou 2, **caractérisé en ce que** le second matériau (3) comporte une zone de déchirure (31) qui permet un déchirement du second matériau (3) sous la pression du coussin qui se déploie.

4. Module d'airbag selon la revendication 3, **caractérisé en ce que** la zone de déchirure (31) est réalisée sous la forme d'un affaiblissement du matériau et/ou sous la forme d'une perforation dans le second matériau (3).

5. Module d'airbag selon l'une des revendications 2 à 4, **caractérisé en ce que** la première couche est réalisée sous la forme d'un premier film et la seconde couche est réalisée sous la forme d'un second film.

6. Module d'airbag selon l'une des revendications 2 à 5, **caractérisé en ce que** l'enveloppe similaire à un film comprend :
- un film inférieur, qui constitue un récepteur, dans lequel le coussin est reçu ; et
- un film supérieur, qui referme le récepteur constitué par le film inférieur.

7. Module d'airbag selon la revendication 6, **caractérisé en ce que** seul le film supérieur comprend la première et la seconde couche.

8. Module d'airbag selon la revendication 6, **caractérisé en ce que** le film intérieur tout comme le film supérieur comprennent chacun la première et la seconde couche.

9. Module d'airbag selon la revendication 7 ou 8, **caractérisé en ce que** le film supérieur comprend une autre couche, qui est mieux soudable que la première couche avec le film inférieur.

10. Module d'airbag selon l'une des revendications 2 à 9, **caractérisé en ce que** la seconde couche présente une épaisseur d'au moins 0,1 mm.

11. Module d'airbag selon l'une des revendications précédentes, **caractérisé en ce que** le premier matériau (2) est relié avec le second matériau (3).

12. Module d'airbag selon la revendication 1, **caractérisé en ce que** le premier matériau et le second matériau (2, 3) sont reliés par stratification et/ou par laminage.

13. Module d'airbag selon l'une des revendications précédentes, **caractérisé en ce que** le second matériau (3) comprend un non-tissé en polyéthylène, du polyéthylène HD, du polycarbonate et/ou du polyamide.

14. Module d'airbag selon l'une des revendications précédentes, **caractérisé en ce que** le second matériau (3) présente une résistance à la déchirure d'au moins 70 N/mm².

15. Procédé pour réaliser un module d'airbag, en particulier selon l'une des revendications précédentes, comprenant les étapes suivantes :
- préparation et pliage d'un coussin gonflable ;
- emballage sous vide du coussin gonflable plié dans une enveloppe (1) qui comporte un premier matériau et un second matériau (2, 3), **caractérisé en ce que**
- le premier matériau (2) présente une perméabilité aux gaz plus faible que le second matériau (3), et le second matériau (3) présente une résistance à la déchirure plus élevée que le premier matériau (2).
